# EUROPÄISCHE PATENTSCHRIFT

(11) **EP 2 777 413 B1**
(45) Veröffentlichungstag und Bekanntmachung des Hinweises auf die Patenterteilung: **02.11.2016**
(21) Anmeldenummer: 13158694.3
(22) Anmeldetag: 12.03.2013
(51) Int. Cl.: A43B 5/04, A43B 7/28, A43B 5/16, B29D 35/00

(54) **Verfahren zur Herstellung eines Schuhs, Schuh sowie Vorrichtung zur Durchführung des Verfahrens**
Method for manufacturing a shoe, shoe and device for performing the method
Procédé de fabrication d'une chaussure, chaussure et dispositif d'exécution du procédé

(43) Veröffentlichungstag der Anmeldung: 17.09.2014
(73) Patentinhaber: Sport Zeisler OHG, 85368 Moosburg (DE)
(72) Erfinder: Zeisler, Albrecht, 84079 Bruckberg (DE)
(74) Vertreter: Pfenning, Meinig & Partner mbB

(56) Entgegenhaltungen:
- EP-A2- 0 842 619
- WO-A2-2009/046477
- DE-A1- 2 320 407
- FR-A5- 2 111 147

## Beschreibung

Die vorliegende Erfindung betrifft ein Verfahren zur Herstellung eines an den Fuß eines Benützers angepassten Schuhs, der eine harte Außenschale sowie einen Innenschuh aufweist, wobei gleichzeitig eine Anpassung des Innenschuhs sowie der harten Außenschale an die Fußform des Benützers erfolgt. Die vorliegende Erfindung betrifft ebenso einen entsprechend hergestellten Schuh sowie eine Vorrichtung zur Durchführung des zuvor genannten Verfahrens.

Seit Ende der 1970er Jahre wird versucht, Sportschuhe, die eine harte Außenschale sowie einen eingesetzten Innenschuh aufweisen, insbesondere Skistiefel, hinsichtlich ihrer Passform zu verbessern, um den Tragekomfort für einen Benützer zu erhöhen.

Ein Skischuh bzw. Skistiefel besteht grundsätzlich aus einem Innenschuh und einer Außenschale aus festem Kunststoff sowie einer Sohle. Da jeder Fuß eine individuelle Fußform hat, gibt es im eigentlichen Sinne nie den optimalen Skistiefel, da keine direkte Anpassung des Skistiefel an den Fuß gegeben ist. Außer der Längen- bzw. Größenentscheidung sind Schalen und Innenschuhe für jeden Skistiefel gleich. Insbesondere bei schmal ausgebildeten Füßen wird der Halt im Skistiefel vermindert; besonders problematisch ist dabei, dass der Fersenhalt nur unzulänglich gegeben ist. Bei dicken Füßen ist vermehrt wie Bildung von Druckstellen und Blasen zu beobachten, zudem besteht die Gefahr, dass durch die Druckstellen die Durchblutung des Fußes vermindert ist, wobei die Füße des Benützers insbesondere in kalter Umgebung auskühlen.

Ein erster Versuch, die zuvor genannten Problematiken zu mindern, bestand darin, den Innenschuh auszuschäumen. Hierbei wird der Innenschuh mit Schaum ausgefüllt, so dass sich der Innenschuh individuell an die vorgegebene Fußform des Benützers anpasst. Je nach Größe bzw. Volumen des Fußes wird dabei die Menge an eingegebenem Schaum variiert und auf den Fuß abgestimmt. Derartige Verfahren sind beispielsweise in der DE 37 14 063 oder der WO 87/01566 beschrieben. Die harte Außenschale eines derartigen Skistiefels bleibt dabei völlig unbearbeitet. Problematisch bei derartigen Schäumverfahren ist allerdings, dass beim Ausschäumen des Innenschuhs durch das zusätzliche Volumen des Schaums ein gewisser Druck auf die Außenschale wirkt. Insbesondere in einer warmen Umgebung, wie sie beispielsweise in Ladengeschäften anzutreffen ist, sowie durch die entstehende Härtungswärme eines chemisch härtbaren Schaumes (beispielsweise Polyurethanschäume) gibt die Außenschale dem entstehenden Druck nach und dehnt sich dabei aus. In einer späteren Anwendungsumgebung, insbesondere bei niederen Temperaturen, kann es gegeben sein, dass die Außenschale aufgrund des Formengedächtnisses der thermoplastischen Materialien in den ursprünglichen Zustand zurückkehrt und somit Druck auf den Innenschuh und damit auf den Fuß des Benützers ausübt. Insbesondere bei längerem Tragen kann dies zu einem geschmälerten Tragekomfort und Schmerzen beim Benützer führen. Derartige Skistiefel sind von einer hohen Reklamationsrate betroffen und müssen aufwendig nachbearbeitet werden.

Eine weitere Variante der Anpassung von Skistiefeln besteht darin, den gesamten Skischuh über den Erweichungspunkt des thermoplastischen Materials hinaus zu erwärmen und den so erwärmten Skistiefel an die Fußform des Benützers anzupassen. Hierzu steigt beispielsweise der Benützer in den erwärmten Skistiefel; anschließend werden die Stiefel fest verschlossen und ausgehärtet. Gegebenenfalls kann zusätzlicher Druck von außen auf die Außenschale ausgeübt werden. Derartige Verfahren sind beispielsweise aus der WO 2009/046477 oder der WO 2011/153567 bekannt. Nachteilig bei diesen Verfahren ist allerdings, dass insbesondere bei extrem ausgebildeten Fußfehlstellungen, wie beispielsweise Hallux valgus, Hammerzehen etc., eine nur unzulängliche Anpassung des Skistiefel an die vorgegebene Fußform möglich ist. Etwaige Passformprobleme sind somit nach wie vor prinzipiell nicht beseitigbar.

Aufgabe der vorliegenden Erfindung ist es somit, ein Verfahren zur Anpassung eines Schuhs, insbesondere eines Sportschuhs, wie beispielsweise eines Skistiefels, eines Tourenstiefels, eines Schlittschuhs etc., anzugeben, der eine harte Außenschale und einen Innenschuh umfasst. Das Verfahren soll dabei optimal die Fußform des Benützers abbilden, möglichst einfach durchzuführen sein und eine manuelle Nachbearbeitung des angepassten Schuhs erübrigen. Zudem ist es Aufgabe der vorliegenden Erfindung, einen entsprechend angepassten Schuh, wie beispielsweise einen Skistiefel, bereitzustellen sowie eine Vorrichtung zur Durchführung des erfindungsgemäßen Verfahrens zu ermöglichen.

Diese Aufgabe wird bezüglich eines Verfahrens zur Herstellung eines an den Fuß eines Benützers angepassten Schuhs mit den Merkmalen des Patentanspruchs 1, bezüglich eines entsprechenden Schuhs mit den Merkmalen des Patentanspruchs 11 sowie bezüglich einer Vorrichtung zur Durchführung des erfindungsgemäßen Verfahrens mit den Merkmalen des Patentanspruchs 12 gelöst. Die jeweilig abhängigen Patentansprüche stellen dabei vorteilhafte Weiterbildungen dar.

Die vorliegende Erfindung betrifft somit ein Verfahren zur Herstellung eines an den Fuß eines Benützers angepassten Schuhs, der eine zumindest bereichsweise oder vollständig aus einem thermoplastischen Kunststoff gebildete Außenschale und einen zumindest bereichsweise geschäumten, in die Außenschale eingepassten Innenschuh aufweist, bei dem die Außenschale zumindest bereichsweise oder vollständig über den Erweichungspunkt dies thermoplastisch verformbaren Materials erwärmt, der Fuß des Benützers oder ein die Fußform des Benützers wiedergebender Fußleisten in einen zum Ausbildung des zumindest bereichsweise geschäumten. Innenschuhs vorgesehenen doppelwandigen Strumpf, der mindestens ein Kompartiment zur Aufnahme eines härtbaren Schaumes aufweist, eingeführt, der doppelwandige Strumpf mitsamt dem eingeführten Fuß bzw. dem Bein des Benützers oder dem die Fußform des Benützers wiedergebenden eingeführten Fußleisten in die erwärmte Außenschale eingeführt, das mindestens eine Kompartiment des doppelwandigen Strumpfs mit einem härtbaren Schaum und/oder mit einen härtbaren Schaum bildenden Reagenzien ausgefüllt, vor Aushärtung des Schaums zumindest bereichsweise ein von außen auf die Außenschale wirkender Druck appliziert und der härtbare Schaum ausgehärtet wird.

Mit der vorliegenden Erfindung werden gleich mehrere Vorteile realisiert.

Zum einen ist es möglich, in lediglich einem einzigen Arbeitsschritt sowohl den Innenschuh als auch die Außenschale gleichzeitig an die genaue Fußform eines Benützers anzupassen. Dadurch wird eine äußerst gute Passform des Schuhs erzielt.

Zudem wird vermieden, dass Spannungen im Schuh entstehen, wie sie beispielsweise bei den zuvor aus dem Stand der Technik bekannten Verfahren auftreten.

Ebenso kann ein optimaler Fersensitz gewährleistet werden, was insbesondere bei Schuhen für Sportzwecke, wie beispielsweise Skistiefel, von hoher Bedeutung ist.

Ebenso kann die Dicke des Innenschuhs auf das nötige Minimum reduziert werden, so dass sich auch hochwertige, für sportliche Zwecke geeignete Schuhe herstellen lassen.

Durch die optimale Anpassung des Schuhs an den Fuß des Benutzers erfolgt gleichzeitig eine ideale Risthöhenanpassung, so dass das hergestellte Schuhwerk nicht drückt. Insbesondere entfallen dadurch manuelle Nachbearbeitungen.

Das vorgestellte Verfahren ist zudem genormt, präzise, reproduzierbar und auf einfachste Art und Weise durchführbar. Aufgrund der Tatsache, dass der hergestellte Schuh aufgrund der idealen Passform nicht mehr nachbearbeitet werden muss, entfallen insbesondere orthopädische Vorkenntnisse oder entsprechend geschultes Fachpersonal. Das Verfahren ist zudem selbstregulierend, so dass ein großer Erfahrungsschatz eines Anwenders des Verfahrens entfallen kann, wodurch auch Ausschuss reduziert wird.

Das erfindungsgemäße Verfahren kombiniert somit eine thermische Anpassung der aus thermoplastischem Kunststoff gebildeten Außenschale und einen gleichzeitig erfolgenden Ausschäumschritt des Innenschuhs.

Die Außenschale kann dabei lediglich bereichsweise aus thermoplastisch verformbaren Materialien bestehen; insbesondere bei Skistiefeln ist die Außenschale in der Regel jedoch vollständig aus thermoplastisch verformbaren Materialien gebildet.

Als thermoplastisch verformbare Materialien im Sinne der Erfindung werden dabei bevorzugt sämtliche thermoplastischen Kunststoffe verständen, die bei Schuhen, insbesondere bei Skistiefeln, für Außenschalen zum Einsatz kommen. Beispielhafte, Materialien hierfür sind z. B. Polyurethane, Polyolefine oder Polyvinylchlorid. Bezüglich möglicher einsatzbarer Materialien wird hierzu auf den Stand der Technik verwiesen.

Zur Ausbildung des angepassten Schuhs wird zudem ein doppelwandiger Strumpf in die Außenschale eingesetzt. Der doppelwandige Strumpf weist dabei mindestens ein Kompartiment zur Aufnahme eines härtbaren Schaumes auf, d.h., der doppelwandige Strumpf stellt den Rohling des späteren fertig ausgeschäumten Innenschuhs dar. Der härtbare Schaum bzw. die Reagenzien, die zur Ausbildung des härtbaren Schaums in das Kompartiment des Innenschuhs aufgegeben werden, werden in der Regel über im doppelwandigen Strumpf vorgesehene Öffnungen in diesen eingeführt. Vorzugsweise weist der doppelwandige Strumpf weitere Auslassöffnungen für den härtbaren Schaum auf, so dass ein schnelles und vollständiges Ausfüllen des doppelwandigen Strumpfes mit den härtbaren Schäumen bzw. den entsprechenden Reagenzien zur Bildung dieser Schäume möglich ist. Derartige Äusschäumverfahren sind per se bereits aus dem Stand der Technik bekannt; bezüglich möglicher Ausführungsformen derartiger Schäumverfahren wird auf die bereits eingangs erwähnten Druckschriften WO 87/01566 und DE 37 14 063 verwiesen. Sämtliche Parameter bezüglich möglicher Ausschäumvarianten, wie sie diesen Druckschriften zu entnehmen sind, können auch für die vorliegenden Erfindung herangezogen werden.

Zur Abbildung der Fußform des Benützers kann dabei der eigentliche Fuß des Benützers selbst herangezogen werden. Gemäß dieser besonders bevorzugten Ausführungsform wird der doppelwandige Strumpf an den Fuß des Benützers angelegt und der Fuß bzw. das Bein des Benützers mit doppelwandigem Strumpf in die Außenschale eingeführt. Ebenso ist es jedoch möglich, einen Leisten anzufertigen, der der Fußform des Benützers entspricht, und diesen in den doppelwandigen Strumpf einzusetzen.

Als härtbare Schäume kommen dabei insbesondere chemisch aushärtbare Schaumsysteme in Frage bzw. diesen chemisch aushärtbaren Schäumen zugrunde liegende Reagenzien. Bevorzugte härtbare Schaumsysteme sind dabei Polyurethanschaumsysteme; die entsprechenden zugrunde liegenden Reagenzien beruhen dabei auf Isocyanaten und Diolen. Durch Vormischen dieser Reagenzien und zeitnahes Einbringen in das mindestens eine Kompartiment des doppelwandigen Strumpfes ist somit eine gleichmäßige Verteilung des Schaumes und ein vollständiges Ausschäumen des doppelwandigen Strumpfes gegeben. Zudem können gemäß der vorliegenden Erfindung ebenso härtbare Silikonschäume angewendet werden.

Erfindungswesentlich ist nunmehr, dass nach Einleiten des Schaumes bzw. der hierfür vorgesehenen Reagenzien, jedoch vor vollständiger Aushärtung des Schaumes zumindest bereichsweise ein von außen auf die Außenschale wirkender Druck appliziert wird. Der Druck wirkt dabei auf die Außenschale in Richtung des Innenschuhs. Da sich zumindest die Bereiche der Außenschale, die über den Erweichungspunkt des thermoplastisch verformbaren Materials erwärmt wurden, bzw. die gesamte Außenschale in erweichtem, also thermoplastisch verformbarem Zustand befindet, erfolgt durch die Applikation des Drucks eine Anpassung der Außenschale an den Innenschuh, also den bereits mit härtbarem Schaum gefüllten doppelwandigen Strumpf. Dieser gibt den von außen auf die Außenschale wirkenden Druck weiter an den Fuß. Da auch das Schaummaterial im Innenschuh noch nicht ausgehärtet ist, findet ebenso eine Anpassung des innenschuhs sowohl an die Außenschale als auch an die Innenschale statt. Somit kann in einem einzigen Verfahrensschritt eine gleichzeitige Anpassung der Außenschale und des Innenschuhs an die Fußform erfolgen.

Abschließend wird der härtbare Schaum ausgehärtet; bei chemisch aushärtbaren Schaumsystemen erfolgt die Aushärtung dabei von selbst, d. h., es muss die jeweilige Zeitspanne bis zum Aushärten des Schaumes abgewartet werden. Derartige Aushärtezeiten sind für jedes schäumbare System bekannt bzw. können auf einfache Art und Weise ermittelt werden. Die Aushärtung ist dann erreicht, wenn das Schaumsystem die notwendige Eigenfestigkeit aufweist.

Eine bevorzugte Ausführungsform der vorliegenden Erfindung sieht vor, dass der auf die Außenschale applizierte äußere Druck bis zur Aushärtung des Schaumes aufrechterhalten wird. Hierdurch ist gewährleistet, das während des Aushärtprozesses des Schaumsystems keine Deformation des Innenschuhs und/oder der Außenschale stattfinden kann.

Bevorzugt ist ferner, wenn der Druck im Wesentlichen gleichmäßig verteilt auf die Außenschale appliziert wird, d. h., der applizierte Druck wirkt im Wesentlichen gleichmäßig an jeder Stelle der Außenschale und wirkt in Richtung Schuhinneres.

In einer weiteren bevorzugten Variante wird die Außenschale vor Ausfüllen des mindestens einen Kompartiments des doppelwandigen Strumpfs in einer für den Gebrauchszustand des Schuhs vorgesehenen Verschlussstellung geschlossen. Ein Schließen kann beispielsweise implizieren, dass vorhandene Schnürsenkel geschlossen werden und/oder insbesondere bei Skistiefeln oder Schlittschuhen vorhandene Schnallen in die vorgesehene Verschlussstellung gebracht und geschlossen werden.

Der Tragekomfort des fertigen Schuhs kann weiter erhöht werden, wenn vor Einführen des Fußes des Benützers oder des die Fußforrh des Benützers wiedergebenden Fußleistens ein an die Fußform des Benutzers angepasstes Fußbett gefertigt und in den doppelwandigen Strupf eingesetzt wird.

Selbstverständlich ist es ebenso bevorzugt, wenn vor Durchführung des Verfahrens der Fuß vermessen wird, beispielsweise die Fußgröße bestimmt und eine geeignete Außenschale oder ein geeigneter doppelwandiger Strumpf zur Herstellung des Innenschuhs für den jeweiligen Benutzer ausgewählt wird. Kriterien für die Auswahl der Außenschale und/oder des doppelwandigen Strumpfes für den Innenschuh können ebenso die Sportlichkeit, das Gewicht oder sonstige Besonderheiten des Benützers implizieren.

Das Material des doppelwandigen Strumpfes ist dabei nicht beschränkt, es muss lediglich gewährleistet sein, dass ein permanenter Einschluss des härtbaren Schaumes gewährleistet ist. Beispielhafte Materialien, die für den doppelwandigen Strumpf verwendet werden können, sind dabei flexible Kunststoffmaterialien, wie beispielsweise Polyurethane, Polyvinylchlorid etc., jedoch können ebenso textile Materialien oder Leder angewendet werden. Vorzugsweise ist der doppelwandige Strumpf auf der Innenseite mit einem Textilmaterial ausgebildet.

Der doppelwandige Strumpf kann ebenso eine Zunge im vorderen Bereich umfassen, d. h. einen Teil, der am Schienbein des Benützers anliegt. Diese Zunge kann ebenso als doppelwandige Kammer ausgebildet sein und beim erfindungsgemäßen Verfahren gleichzeitig mit ausgeschäumt werden; ebenso ist es möglich, dass die Zunge beispielsweise aus thermoplastisch verformbaren Materialien gebildet ist und sich beim Applizieren des Drucks gemäß dem erfindungsgemäßen Verfahren und der Wärme durch die Außenschale an die anatomischen Gegebenheiten des Fußes bzw. des Beines des Benützers anpasst.

Eine besonders bevorzugte Variante zur Applikation des äußeren Druckes auf die Außenschale sieht vor, dass nach Einführen des doppelwandigen Strumpfs zur Applikation des äußeren Drucks auf die Außenschale die Außenschale mit eingeführtem doppelwandigen Strumpf und dem Fuß bzw. dem Bein des Benützers oder dem Fußleisten in einen Innenraum eines die Außenschale im Wesentlichen oder vollständig umhüllenden flexiblen Druckelements eingeführt wird und außerhalb des Druckelements (Außenraum des Druckelements) ein Überdruck und/oder im Innenraum des Druckelementes ein Unterdruck erzeugt wird, wodurch sich das flexible Druckelement an die Außenschale anschmiegt und Druck auf die Außenschale ausübt.

Das flexible Druckelement, das gemäß dieser besonders bevorzugten Variante der vorliegenden Erfindung verwendet wird, kann im einfachsten Fall ein sackförmige Element sein, das den Schuh aufnehmen kann. Durch hermetischen Verschluss dieses flexiblen Druckelementes (beispielsweise dadurch, dass das Druckelement an den Unterschenkel des Benützers angepasst wird, oder dadurch, dass das Druckelements vollständig geschlossen wird, wie im Beispielsfalle des eingeführten Fußleistens) kann das Druckelement beispielsweise evakuiert werden, so dass bedingt durch den atmosphärischen Überdruck das flexible Element sich vollflächig an die Außenschale des Schuhs anschmiegt und dadurch Druck auf diese ausübt. Bezüglich der Details einer derartigen Ausführung wird auf die WO 2009/046477 A2 verwiesen.

Bevorzugt wird jedoch das flexible Druckelement in einem separaten Kompartiment hierzu angeordnet, wobei die Ausbildung eines Überdruckes, beispielsweise durch Zugabe eines komprimierten Fluids, insbesondere eines Gases, besonders bevorzugt Luft, möglich ist. Auch hierdurch wird das flexible Druckelement vollflächig an die Außenschale des Schuhs angepresst und übt dadurch einen gleichmäßig verteilten Druck auf die Außenschale aus.

Hinsichtlich der Reihenfolge der Verfahrensschritte ist es vorteilhaft, wenn der Schuh zunächst in das flexible Druckelement eingeführt wird und das Ausschäumen des doppelwandiges Strumpfes erst in eingeführtem Zustand erfolgt. Insofern kann unmittelbar nach Einfüllen des härtbaren Schaumes bzw. der entsprechenden Reagenzien mit der Druckbeaufschlägung begonnen werden.

Vorteilhaft ist ferner, wenn während und/oder nach der Aushärtung des Schaums und/oder während, und/oder nach Applikation des Drucks die Außenschale gekühlt wird, insbesondere dadurch, dass der Außenraum, d.h. die unmittelbare Umgebung des flexiblen Druckelementes teilweise oder vollständig mit einem kühlenden Fluid, vorzugsweise einer Flüssigkeit, insbesondere Wasser gefüllt wird.

Durch Kühlen der Außenschale kann eine schnelle Überführung der Außenschale aus dem thermoplastischen erweichten Zustand in den ausgehärteten Zustand erfolgen, so dass das Anpassungsverfahren in zeitlicher Hinsicht wesentlich verkürzt werden kann. Das dabei eingesetzte Kühlfluid weist dabei bevorzugt Temperaturen auf, die unterhalb des Erweichungspunktes des thermoplastischen Materials liegen; vorzugsweise kann beispielsweise Leitungswasser mit Temperaturen zwischen 0 °C und 30 °C verwendet werden.

Vorteilhaft ist ferner, wenn der applizierte Druck 0,1 bis 2,0 bar, vorzugsweise 0,2 bis 1,0 bar, besonders bevorzugt 0,3 bis 0,5 bar, gegenüber Atmosphärendruck beträgt.

Die vorliegende Erfindung betrifft ebenso einen Schuh, bevorzugte für Sportzwecke, insbesondere Skistiefel oder Schlittschuh, umfassend eine zumindest bereichsweise oder vollständig aus einem thermoplastischen Kunststoff gebildete Außenschale und einen zumindest bereichsweise geschäumten, in die Außenschale eingepassten Innenschuh, herstellbar oder hergestellt gemäß einem zuvor vorgestellten Verfahren. Der erfindungsgemäße Schuh zeichnet sich dadurch aus, dass sowohl Außenschale als auch Innenschale in einem einzigen Verfahrensschritt angepasst sind und somit eine optimale Anpassung an den Fuß eines Benützers aufweisen. Insbesondere ist beim erfindunggemäßen Schuh gewährleistet, dass sämtliche bestehenden Zwischenräume zwischen Außenschale und Innenschuh ausgefüllt sind.

Die Erfindung betrifft ferner eine Vorrichtung zur Durchführung des zuvor vorgestellten erfindungsgemäßen Verfahrens. Diese Vorrichtung umfasst
a) ein druckfest ausgebildetes Kompartiment mit mindestens einer Aufnahmeöffnung zur Durchführung eines Schuhs und/oder
b) mindestens ein im Inneren des druckfest ausgebildeten Kompartiments angeordnetes flexibles Druckelement, das zur Umhüllung des eingeführten Schuhs ausgebildet ist, wobei jedes flexible Druckelement druckdicht gegenüber jeweils einer Aufnahmeöffnung ausgebildet ist, so dass zwischen dem druckfesten Kompartiment und dem flexiblen Druckelement ein Außenraum des Druckelements, der gegenüber der äußeren Umgebung druckdicht abgeschlossen bzw. abschließbar ist, und ein gegen den Außenraum druckdicht abgeschlossener Innenraum des flexiblen Druckelements, der über die Aufnahmeöffnung mit der äußeren Umgebung in Verbindung steht, ausgebildet ist,
c) mindestens einen am druckfesten Kompartiment angebrachten Einlass zum Einleiten eines Druck ausbildenden Fluids, bevorzugt eines Gases, insbesondere Luft, in das druckfeste Kompartiment bzw. den Außenraum des Druckelements sowie
d) mindestens einen Einlass zum Einleiten eines kühlenden Fluids, bevorzugt einer Flüssigkeit, insbesondere Wasser, in das druckfeste Kompartiment bzw. in den Außenraum des Druckelements.

Das druckfest ausgebildete Kompartiment der erfindungsgemäßen Vorrichtung umgibt somit das flexible Druckelement, das beispielsweise im Wesentlichen sackförmig ausgebildet sein kann. Durch die Aufnahmeöffnung kann ein Schuh in den Innenraum des flexiblen Druckelements eingeführt werden. Der Außenraum des Druckelementes, d. h. der Zwischenraum zwischen flexiblem Druckelement und druckfest ausgebildetem Kompartiment bildet dabei einen abgeschlossenen Raum, so dass in diesem Außenbereich ein Überdruck erzeugt werden kann und das flexible Element durch den Überdruck verformt wird, sich beispielsweise an die Konturen eines eingeführten Schuhs anpassen kann.

Bevorzugt weist die erfindungsgemäße Vorrichtung zusätzlich
a) einen Auslass zum Ablassen des Druck ausbildenden Fluids, bevorzugt ein druckregelbares Ablassventil, und/oder
b) einen Auslass zum Ablassen des kühlenden Fluids, bevorzugt ein Sperrventil,
auf.

Weiter vorteilhaft ist dabei, dass das flexible Druckelement bodenseitig form- und/oder kraftschlüssig mit dem Boden des druckfesten Kompartiments verbunden ist. Gemäß dieser besonders bevorzugten Ausführungsform kann bei Betrieb der Vorrichtung, d. h. bei Applikation eines Überdruckes im Außenbereich des flexiblen Druckelementes, gewährleistet werden, dass dieses au Ort und Stelle verbleibt und nicht durch die Aufnahmeöffnung ausgedrückt wird. Besonders bevorzugt hierbei ist, wenn die Fixierung einen Standplatz z.B. in Form eines entsprechend bemessenen Klotzes für den eingeführten Schuh umfasst.

Gemäß einer weiter bevorzugten Ausführungsform ist in vertikaler Richtung der Einlass zum Einleiten eines Druck ausbildenden Fluids und, falls vorhanden, der Auslass zum Ablassen des Druck ausbildenden Fluids unterhalb des Einlasses zum Einleiten eines kühlenden Fluids und, falls vorhanden, dem Auslass zum Ablassen des kühlenden Fluids angeordnet.

Die vorliegende Erfindung wird anhand der nachfolgenden beispielhaften Ausführungen näher erläutert, ohne die Erfindung jedoch auf die dargestellten speziellen Parameter zu beschränken.

Das erfindungsgemäße Verfahren und die erfindungsgemäße Vorrichtung werden nachfolgend anhand eines Anpassungsverfahrens für einen Skistiefel beschrieben.

Dabei zeigen:
- Fig. 1: die prinzipiellen Bestandteile eines ausschäumbaren Skistiefels
- Fig. 2: einen Skistiefel im zusammengebauten Zustand mit eingeführtem Bein eines Benützers sowie
- Fig. 3: eine erfindungsgemäße Vorrichtung zur Durchführung des erfindungsgemäßen Verfahrens.

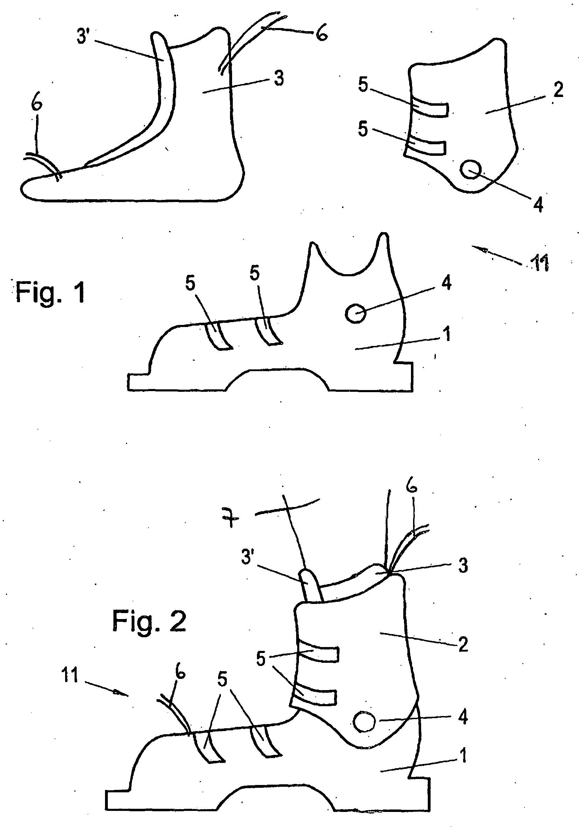

Figur 1 zeigt einen an und für sich bekannten Skistiefel 11, der eine Unterschale 1, eine Manschette 2, einen Innenschuh 3 mit einer sogenannten Zunge 3' und einem Gelenk 4, das die Manschette 2 mit der Unterschale 1 gelenkig verbindet, umfasst; dabei dienen Schnallen 5 zum Verschließen des Skistiefels. Der Innenschuh 3 ist dabei als schaumbarer Innenschuh ausgestaltet, d. h. als doppelwandiger Strumpf ausgebildet. Zum Befüllen des im doppelwandigen Strumpf (Innenschuh 3) ausgebildeten leeren Kompartiments sind Zu- und Abläufe in Form von Schläuchen 6 vorgesehen, mit denen der härtbare Schaum bzw. die Reagenzien, aus denen sich der härtbare Schaum erzeugen lässt, in den Innenschuh 3 eingefüllt werden können.

Vor Durchführung des Anpassungsverfahrens wird die Außenschale, bestehend aus Unterschale 1 und Manschette 2, über das Gelenk 4 zusammengebaut; gegebenenfalls ist die Außenschale bereits werksseitig in diesem Zustand vorgesehen. Dabei ist die Außenschale, d. h. insbesondere die Unterschale 1 bzw. die Manschette 2, teilweise oder vollständig aus-einem thermoplastisch verformbaren Material gebildet.

Zunächst wird die Größe der Außenschale und des Innenschuhs entsprechend der Schuhgröße eines Benützers ausgewählt.

Im Anschluss daran wird die zusammengebaute Außenschale über den Erweichungspunkt des thermoplastischen Materials erwärmt, beispielsweise in einem Ofen oder beispielsweise durch ein Heißluftgebläse. Mittels eines Heißluftgebläses können insbesondere lediglich Stellen der Außenschale erwärmt werden, während beim Erwärmen in einem Ofen die gesamte Außenschale erwärmbar und somit in den thermoplastisch verformbaren Zustand überführbar ist. Dabei wird das thermoplastische Material der Außenschale auf Temperaturen oberhalb des Erweichungspunktes erwärmt; bevorzugte Temperaturen hängen von der Art des Kunststoffes ab und liegen in der Regel in einem Bereich von ca. 70 - 120 °C.

Der Fuß 7 eines Benutzers wird in den doppelwandigen Strumpf für den Innenschuh 3 eingeführt und zusammen mit dem Innenschuh 3 in die erwärmte Außenschale eingeführt. Der resultierende Zustand ist in Figur 2 dargestellt. Dabei ist sicherzustellen, dass die Zu- und Ableitungen 6 für den härtbaren Schaum an geeigneten Stellen aus der Außenschale herausgeführt sind, beispielsweise am Heck des Stiefels oder auch an einer in der Regel zehenseitig befindlichen Dichtungsstelle. Die Schnallen 5 werden sodann im für den Benützer optimalen Verschlusszustand des Skistiefels 11 verschlossen.

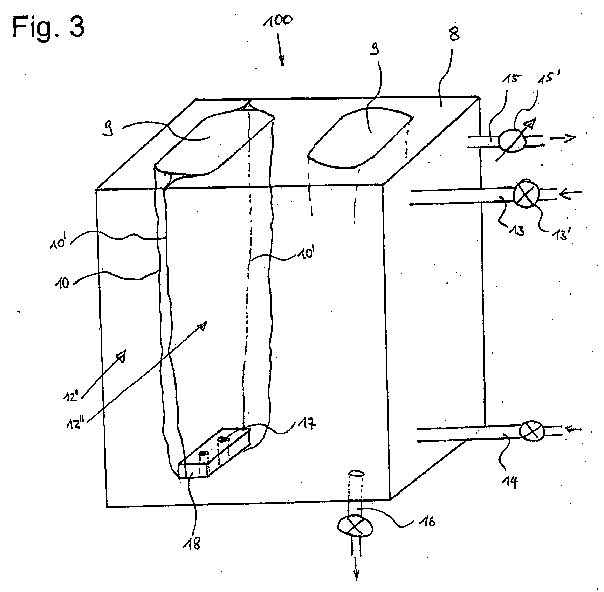

Der in Fig. 2 dargestellte Skistiefel 11 mit eingeführtem Fuß 7 des Benützers wird in einem Zustand, in dem das thermoplastische Material der Außenschale nach wie vor verformbar ist, d. h. nach wie vor eine Temperatur aufweist, die oberhalb des Erweichungspunktes für das thermoplastische Material liegt, in eine erfindungsgemäße Vorrichtung 100 eingeführt. Eine derartige Vorrichtung ist in Figur 3 dargestellt. Die erfindungsgemäße Vorrichtung 100 umfasst dabei zwei Aufnahmeöffnungen 9 zur Einführung eines Paares von Schuhen, beispielsweise Skistiefeln 11. Die in Fig. 3 rechts dargestellte Aufnahmeöffnung ist lediglich schematisch dargestellt, funktional aber mit der links dargestellten Aufnahmeöffnung 9 sowie dem darunter angeordneten flexiblen Element 10 absolut identisch ausgeführt. Die erfindungsgemäße Vorrichtung 100 umfasst nun ein flexibles Element 10, das sich an die Aufnahmeöffnung 9 anschließt und bis zum Boden der Vorrichtung 100 herabreicht. Das flexible Element 10 kann beispielsweise als PVC-Folie ausgestaltet sein. Die Dicke der Folie sollte dabei so bemessen sein, dass nach wie vor eine gute Flexibilität des flexiblen Elements 10 gewährleistet ist und andererseits Überdrücke von beispielsweise bis zu 1 bar, bevorzugt bis zu 2 bar auf das flexible Element ausgeübt werden können, ohne dass dieses reißt. Das flexible Element 10 kann dabei aus zwei bündig verklebten oder verschweißten PVC-Folien bestehen, so dass sich zwei Falze 10' an den jeweiligen Enden ergeben. Das flexible Element 10 ist bodenseitig fixiert 17, beispielsweise durch Schrauben, die das flexible Element bodenseitig mit dem Boden des Kompartimentes 8 verbinden. Das Kompartiment 8 ist dabei druckdicht gegenüber dem flexiblen Element 10 ausgebildet. Hierzu ist das flexible Element 10 an der Oberseite im Bereich der Aufnahmeöffnung 9 druckdicht mit der Oberseite des Kompartimentes 8 verbunden. Die bodenseitige Fixierung kann ferner einen Standplatz 18 für den eingeführten Schuh umfassen, so dass ein sicherer Stand während der Durchführung des erfindungsgemäßen Verfahrens gewährleistet ist.

Zudem umfasst die erfindungsgemäße Vorrichtung 100 eine Zufuhr 13 für ein Druck ausübendes Fluid, beispielsweise komprimierte Luft, die aus einem Kompressor bereitgestellt werden kann. Die Zuführung kann über ein Überdruck- oder Sperrventil 13' verfügen. Zudem ist ein Ablass 15 für das Druck ausübende Fluid, beispielsweise Luft, vorgesehen, beispielsweise in Form eines Überdruckventils 15', mit dem ein vorbestimmter Überdruck eingestellt werden kann, z. B. ca. 0,4 bar. Zudem ist ein Zulauf 14 für ein kühlendes Fluid, beispielsweise Wasser, vorgesehen, der im unteren Teil der erfindungsgemäßen Vorrichtung 100 angebracht ist. Ebenso ist ein Ablauf 16 für das kühlende Fluid vorhanden. Sowohl Zulauf 14 als auch Ablauf 16 können ebenso mit einem Sperrventil ausgestattet sein.

Zur Durchführung des erfindungsgemäßen Verfahrens wird der Skistiefel mitsamt Fuß des Benützers über die Aufnahmeöffnung 9 in den Innenraum des flexiblen Druckelementes 10 eingeführt, bis der Skistiefel auf dem Standplatz 18 zum Stehen kommt. Im Anschluss wird der doppelwandige Strumpf des Innenschuhs 3 über die Zuleitungen 6 mit einem härtbaren Schaum ausgeschäumt. In unmittelbarem Anschluss an das Ausschäumen des Innenschuhs 3 wird komprimierte Luft über den Einlass 13 in das druckfeste Kompartiment 8 aufgegeben und dem Außenraum 12' des flexiblen Druckelementes 10 zugeführt, so dass sich im Außenraum 11 gegenüber dem Innenraum 12" ein Überdruck aufbaut. Der Überdruck kann über das Überdruckventil 15'auf einen vordefinierten Wert eingestellt werden, so dass bei Gefahr der Überschreitung des vordefinierten Wertes Luft über das Druckventil 15' an die Umgebung abgegeben wird. Durch den Überdruck wird das flexible Druckelement, z. B. die PVC-Folie, an den im Innenraum 12" befindlichen Skistiefel 11 angepresst, wodurch der Überdruck sich auf die Außenschale, die sich nach wie vor im thermoplastisch verformbaren Zustand befindet, übertragen wird. Insofern wird die Außenschale auf den innenschuh und weiter auf den Fuß 7 des Benutzers angepresst, wodurch sowohl der Innenschuh als auch die Außenschale an die genaue Fußform des Benutzers angepasst werden. Der Druck wird so lange aufrechterhalten, bis der Schaum vollständig ausgehärtet ist. Sobald sich der Druck auf den vordefinierten Wert eingestellt hat, d. h. vollständig ausgebildet ist, kann damit begonnen werden, über den Zulauf 14 Wasser in das druckfesten Kompartiment 8 einzuleiten, so dass das Kompartiment 8 und somit auch der Außenraum 12' mit Wasser gefüllt wird. Hierdurch wird durch das flexible Element 10 Wärme in das das flexible Element umspülende Wasser abtransportiert. Vorzugsweise wird hierzu kühles Wasser verwendet (z. B. mit einer Temperatur von 10 °C), so dass beispielsweise bereits während des Aushärtens des Schaums ein Abkühlen der thermoplastischen Außenschale erfolgt und diese in den harten Zustand überführt wird. Es ist jedoch ebenso möglich, einen gewissen Zeitraum abzuwarten, z. B. bis der Schaum teilweise oder vollständig ausgehärtet ist, bis mit der Zuführung des Wassers als Kühlmedium begonnen wird. Nach Abschluss des Verfahren wird der Überdruck abgelassen und Wasser über den Auslass 16 ausgelassen. Der Benützer kann aus der Vorrichtung 100 aussteigen.

## Patentansprüche

1. Verfahren zur Herstellung eines an den Fuß (7) eines Benutzers angepassten Schuhs (11), der eine zumindest bereichsweise oder vollständig aus einem thermoplastischen Material gebildete Außenschale (1, 2) und einen zumindest bereichsweise geschäumten, in die Außenschale (1, 2) eingepassten Innenschuh (3) aufweist, bei dem die Außenschale (1, 2) zumindest bereichsweise oder vollständig über den Erweichungspunkt des thermoplastisch verformbaren Materials erwärmt,
der Fuß des Benutzers oder ein die Fußform des Benutzers wiedergebender Fußleisten in einen zur Ausbildung des zumindest bereichsweise geschäumten Innenschuhs (3) vorgesehenen doppelwandigen Strumpf, der mindestens ein Kompartiment (8) zur Aufnahme eines härtbaren Schaumes aufweist, eingeführt,
der doppelwandige Strumpf mitsamt dem eingeführten Fuß (7) bzw. dem Bein des Benutzers oder dem die Fußform des Benutzers wiedergebenden eingeführten Fußleisten in die erwärmte Außenschale (1,2) eingeführt,
das mindestens eine Kompartiment (8) des doppelwandigen Strumpfs mit einem härtbaren Schaum und/oder mit einen härtbaren Schaum bildenden Reagenzien ausgefüllt,
vor Aushärtung des Schaums zumindest bereichsweise ein von außen auf die Außenschale (1, 2) wirkender Druck appliziert, und
der härtbare Schaum ausgehärtet wird.

2. Verfahren nach Anspruch 1, **dadurch gekennzeichnet, dass** der applizierte äußere Druck bis zur Aushärtung des Schaumes aufrechterhalten wird.

3. Verfahren nach einem der vorhergehenden Ansprüche, **dadurch gekennzeichnet, dass** der Druck im Wesentlichen gleichmäßig verteilt auf die Außenschale (1, 2) appliziert wird.

4. Verfahren nach einem der vorhergehenden Ansprüche, **dadurch gekennzeichnet, dass** die Außenschale (1, 2) und/oder der Innenschuh (3) vor Ausfüllen des mindestens einen Kompartiments (8) des doppelwandigen Strumpfs in einer für den Gebrauchszustand des Schuhs vorgesehenen Verschlussstellung geschlossen wird.

5. Verfahren nach einem der vorhergehenden Ansprüche, **dadurch gekennzeichnet, dass** vor Einführen des Fußes (3) des Benutzers oder des die Fußform des Benutzers wiedergebenden Fußleistens ein an die Fußform des Benutzers angepasstes Fußbett gefertigt und in den doppelwandigen Strupf eingesetzt wird.

6. Verfahren nach einem der vorhergehenden Ansprüche, **dadurch gekennzeichnet, dass** zur Applikation des äußeren Drucks die Außenschale (1, 2) mit eingeführtem doppelwandigen Strumpf und dem Fuß (3) bzw. dem Bein des Benutzers oder dem Fußleisten in einen Innenraum (12") eines die Außenschale (1, 2) im Wesentlichen oder vollständig umhüllenden flexiblen Druckelements (10) eingeführt und außerhalb des Druckelementes (Außenraum des Druckelements) ein Überdruck und/oder im Innenraum des Druckelementes ein Unterdruck erzeugt wird, wodurch sich das flexible Druckelement (10) an die Außenschale (1, 2) anschmiegt und Druck auf die Außenschale (1, 2) ausübt.

7. Verfahren nach vorhergehendem Anspruch, dass der Überdruck durch Beaufschlagung des Außenraumes (12') des flexiblen Druckelements (10) mit einem komprimierten Fluid, vorzugsweise einem Gas, insbesondere Luft und/oder der Unterdruck durch teilweises oder vollständiges Abpumpen der innerhalb des Druckelementes befindlichen Luft erzeugt wird.

8. Verfahren nach einem der beiden vorhergehenden Ansprüche, **dadurch gekennzeichnet, dass** das Einführen der Außenschale (1, 2) mit eingeführtem doppelwandigen Strumpf und dem Fuß (7) bzw. Bein des Benutzers oder dem Fußleisten in das Druckelement vor Ausfüllen des mindestens einen Kompartiments (8) des doppelwandigen Strumpfs mit einem härtbaren Schaum und/oder mit einen härtbaren Schaum bildenden Reagenzien erfolgt.

9. Verfahren nach einem der vorhergehenden Ansprüche, **dadurch gekennzeichnet, dass** während und/oder nach der Aushärtung des Schaums und/oder während und/oder nach Applikation des Drucks die Außenschale (1, 2) gekühlt wird, insbesondere dadurch, dass der Außenraum (12') des flexiblen Druckelementes (10) teilweise oder vollständig mit einem kühlenden Fluid, vorzugsweise einer Flüssigkeit, insbesondere Wasser gefüllt wird.

10. Verfahren nach einem der vorhergehenden Ansprüche, **dadurch gekennzeichnet, dass** der applizierte Druck 0,1 bis 2,0 bar, vorzugsweise 0,2 bis 1,0 bar, besonders bevorzugt 0,3 bis 0,5 bar gegenüber Atmosphärendruck beträgt.

11. Schuh, bevorzugt für Sportzwecke, insbesondere Skistiefel oder Schlittschuh, umfassend eine zumindest bereichsweise oder vollständig aus einem thermoplastischen Kunststoff gebildete Außenschale (1, 2) und einen zumindest bereichsweise geschäumten, in die Außenschale (1, 2) eingepassten Innenschuh (3), herstellbar oder hergestellt gemäß einem Verfahren nach einem der vorhergehenden Ansprüche.

12. Vorrichtung zur Durchführung eines Verfahrens nach einem der Ansprüche 1 bis 10, umfassend
a) ein druckfest ausgebildetes Kompartiment (8) mit mindestens einer Aufnahmeöffnung (9) zur Durchführung eines Schuhs und/oder
b) mindestens ein im Inneren des druckfest ausgebildeten Kompartiments (8) angeordnetes flexibles Druckelement (10), das zur Umhüllung des eingeführten Schuhs ausgebildet ist, wobei jedes flexible Druckelement (10) druckdicht gegenüber jeweils einer Aufnahmeöffnung ausgebildet ist, so dass zwischen dem druckfesten Kompartiment (8) und dem flexiblen Druckelement (10) ein Außenraum des Druckelements, der gegenüber der äußeren Umgebung druckdicht abgeschlossen bzw. abschließbar ist, und ein gegen den Außenraum (12') druckdicht abgeschlossener Innenraum (12") des flexiblen Druckelements, der über die Aufnahmeöffnung (9) mit der äußeren Umgebung in Verbindung steht, ausgebildet ist,
c) mindestens einen am druckfesten Kompartiment (9) angebrachten Einlass (13) zum Einleiten eines Druck ausbildenden Fluids, bevorzugt eines Gases, insbesondere Luft in das druckfeste Kompartiment (8) bzw. den Außenraum (12') des Druckelements, sowie
d) mindestens einen Einlass (14) zum Einleiten eines kühlenden Fluids, bevorzugt einer Flüssigkeit, insbesondere Wasser in das druckfeste Kompartiment (8) bzw. in den Außenraum (12') des Druckelements.

13. Vorrichtung nach vorhergehendem Anspruch, **dadurch gekennzeichnet, dass** das druckfeste Kompartiment (8) zusätzlich
a) einen Auslass (15) zum Ablassen des Druck ausbildenden Fluids, bevorzugt ein druckregelbares Ablassventil und/oder
b) einen Auslass (16) zum Ablassen des kühlenden Fluids, bevorzugt ein Sperrventil
umfasst.

14. Vorrichtung nach einem der beiden vorhergehenden Ansprüche, **dadurch gekennzeichnet, dass** das flexible Druckelement (10) bodenseitig form- und/oder kraftschlüssig mit dem Boden des druckfesten Kompartiments fixiert (8) ist.

15. Vorrichtung nach vorhergehendem Anspruch, **dadurch gekennzeichnet, dass** die Fixierung einen Standplatz für den eingeführten Schuh (11) umfasst.

16. Vorrichtung nach einem der Ansprüche 12 bis 15, **dadurch gekennzeichnet, dass** in vertikaler Richtung der Einlass zum Einleiten eines Druck ausbildenden Fluids und, falls vorhanden, der Auslass zum Ablassen des Druck ausbildenden Fluids unterhalb des Einlasses zum Einleiten eines kühlenden Fluids und, falls vorhanden, dem Auslass zum Ablassen des kühlenden Fluids angeordnet ist.

## Claims

1. Method for producing a shoe (11) adapted to the foot (7) of a user, said shoe having an outer shell (1, 2) formed, at least in regions or completely, from a thermoplastic material and an inner shoe (3) which is foamed at least in regions and fits into the outer shell (1, 2), in which the outer shell (1, 2) is heated, at least in regions or completely, above the softening point of the thermoplastically deformable material,
the foot of the user or a foot last reflecting the foot shape of the user is introduced into a double-walled stocking provided to form the inner shoe (3) which is foamed at least in regions, said stocking having at least one compartment (8) to receive a curable foam,
the double-walled stocking together with the introduced foot (7) or the leg of the user or the introduced foot last reflecting the foot shape of the user is introduced into the heated outer shell (1, 2),
the at least one compartment (8) of the double-walled stocking is filled with a curable foam and/or with reagents forming a curable foam,
before the curing of the foam, a pressure acting from outside onto the outer shell (1, 2) is applied at least in regions, and
the curable foam is cured.

2. Method according to claim 1, **characterised in that** the applied outer pressure is maintained until the curing of the foam.

3. Method according to one of the preceding claims, **characterised in that** the pressure is applied on the outer shell (1, 2) to be substantially evenly distributed.

4. Method according to one of the preceding claims, **characterised in that** the outer shell (1, 2) and/or the inner shoe (3) is closed in a closed position provided for the state of use of the shoe before filling the at least one compartment (8) of the double-walled stocking.

5. Method according to one of the preceding claims, **characterised in that**, before introducing the foot (3) of the user or the foot last reflecting the foot shape of the user, a footbed adapted to the foot shape of the user is produced and is inserted into the double-walled stocking.

6. Method according to one of the preceding claims, **characterised in that**, for the application of the outer pressure the outer shell (1, 2) with an introduced doubled-walled stocking and the foot (3) or the leg of the user or the foot last, is introduced into an interior (12" ) of a flexible pressure element (10) covering the outer shell (1, 2) substantially or completely and an excess pressure is generated outside the pressure element (exterior of the pressure element) and/or a negative pressure is generated in the interior of the pressure element, wherein the flexible pressure element (10) is adapted to the outer shell (1, 2) and exerts pressure onto the outer shell (1,2).

7. Method according to the preceding claim, **characterised in that** the excess pressure is generated by impinging the exterior (12') of the flexible pressure element (10) with a compressed fluid, preferably a gas, in particular air and/or the negative pressure is generated by partially or completely pumping out the air located inside the pressure element.

8. Method according to one of the two preceding claims, **characterised in that** the introduction of the outer shell (1, 2) with an introduced double-walled stocking and the foot (7) or leg of the user or the foot last into the pressure element occurs before filling the at least one compartment (8) of the double-walled stocking with a curable foam and/or with a reagent forming a curable foam.

9. Method according to one of the preceding claims, **characterised in that**, during and/or after the curing of the foam and/or during and/or after the application of pressure, the outer shell (1, 2) is cooled, in particular in that the exterior (12') of the flexible pressure element (10) is filled partially or completely with a cooling fluid, preferably a liquid, in particular water.

10. Method according to one of the preceding claims, **characterised in that** the applied pressure amounts to 0.1 to 2.0 bar, preferably 0.2 to 1.0 bar, particularly preferably 0.3 to 0.5 bar relative to atmospheric pressure.

11. Shoe, preferably for sports purposes, in particular ski boot or ice skate, comprising an outer shell (1,2) formed, at least in regions or completely, from a thermoplastic plastic and an inner shoe (3) which is foamed at least in regions and fits into the outer shell (1, 2), able to be produced or is produced according to a method according to one of the preceding claims.

12. Device to implement a method according to one of claims 1 to 10, comprising
a) a compartment (8) formed to be pressure-resistant, having at least one receiving opening (9) to implement a shoe and/or
b) at least one flexible pressure element (10) arranged inside the compartment (8) formed to be pressure-resistant, which is formed to cover the introduced shoe, wherein each flexible pressure element (10) is formed to be pressure-sealed relative to a respective receiving opening such that an exterior of the pressure element which is finished or able to be finished in a pressure-sealed manner relative to the outer environment, and an interior (12") of the flexible pressure element which is finished to be pressure-sealed against the exterior (12'), said pressure element being connected to the outer environment via the receiving opening (9), is formed between the pressure-resistant compartment (8) and the flexible pressure element (10),
c) at least one inlet (13) attached to the pressure-resistant compartment (9) to introduce a fluid forming pressure, preferably a gas, in particular air, into the pressure-resistant compartment (8) or the exterior (12') of the pressure element, as well as
d) at least one inlet (14) to introduce a cooling fluid, preferably a liquid, in particular water, into the pressure-resistant compartment (8) or into the exterior (12') of the pressure element.

13. Device according to the preceding claim, **characterised in that** the pressure-resistant compartment (8) additionally comprises
a) an outlet (15) to drain the fluid forming pressure, preferably a pressure-adjustable drain valve and/or
b) an outlet (16) to drain the cooling fluid, preferably a shut-off valve.

14. Device according to one of the two preceding claims, **characterised in that** the flexible pressure element (10) is fixed positively and/or non-positively to the base of the pressure-resistant compartment (8) on the base side.

15. Device according to the preceding claim, **characterised in that** the fixing comprises a standing point for the introduced shoe (11).

16. Device according to one of claims 12 to 15, **characterised in that** the inlet to introduce a fluid forming pressure and, if present, the outlet to drain the fluid forming pressure is arranged beneath the inlet to introduce a cooling fluid and, if present, the outlet to drain the cooling fluid, in the vertical direction.

## Revendications

1. Procédé de fabrication d'une chaussure (11) adaptée au pied (7) d'un utilisateur, qui comprend une coque externe (1, 2) constituée au moins partiellement ou entièrement d'un matériau thermoplastique et d'une chaussure interne (3) au moins partiellement constituée de mousse et insérée dans la coque externe (1, 2), dans lequel
la coque externe (1, 2) chauffe, au moins partiellement ou entièrement au-dessus du point de ramollissement du matériau déformable de manière thermoplastique,
le pied de l'utilisateur ou une bande de pied reproduisant la forme du pied de l'utilisateur est introduit dans un bas à double paroi prévu pour la formation de l'au moins une chaussure interne (3) au moins partiellement constituée de mousse, qui comprend au moins un compartiment (8) pour le logement d'une mousse durcissable, le bas à double paroi est introduit, conjointement avec le pied (7) introduit ou la jambe de l'utilisateur ou la bande de pied introduite reproduisant la forme du pied de l'utilisateur dans la coque externe chauffée (1, 2),
l'au moins un compartiment (8) du bas à double paroi est rempli d'une mousse durcissable et/ou de réactifs formant une mousse durcissable,
avant le durcissement de la mousse, au moins partiellement, une pression agissant de l'extérieur est appliquée sur la coque externe (1, 2), et
la mousse durcissable est durcie.

2. Procédé selon la revendication 1, **caractérisé en ce que** la pression externe appliquée est maintenue jusqu'au durcissement de la mousse.

3. Procédé selon l'une des revendications précédentes, **caractérisé en ce que** la pression est appliquée de manière globalement uniforme sur la coque externe (1, 2).

4. Procédé selon l'une des revendications précédentes, **caractérisé en ce que** la coque externe (1, 2) et/ou la chaussure interne (3) est fermée, avant le remplissage de l'au moins un compartiment (8) du bas à double paroi dans une fermeture prévue pour l'état d'utilisation de la chaussure.

5. Procédé selon l'une des revendications précédentes, **caractérisé en ce que**, avant l'introduction du pied (3) de l'utilisateur ou de la bande de pied reproduisant la forme du pied de l'utilisateur, une voûte plantaire adaptée à la forme du pied de l'utilisateur est fabriquée et insérée dans le bas à double paroi.

6. Procédé selon l'une des revendications précédentes, **caractérisé en ce que**, pour l'application de la pression externe la coque externe (1, 2), avec le bas à double paroi ou le pied (3) ou la jambe de l'utilisateur ou la bande de pied introduit à l'intérieur (12") d'un élément de pression (10) flexible entourant globalement ou entièrement la coque externe (1, 2) et, en dehors de l'élément de pression (extérieur de l'élément de pression), une surpression et/ou à l'intérieur de l'élément de pression, une dépression est générée, l'élément de pression flexible (10) épousant ainsi la forme de la coque externe (1, 2) et exerçant une pression sur la coque externe (1, 2).

7. Procédé selon la revendication précédente, **caractérisé en ce que** la surpression est générée par sollicitation de l'extérieur (12") de l'élément de pression flexible (10) avec un fluide comprimé, de préférence un gaz, plus particulièrement de l'air et/ou la dépression est générée par pompage partiel ou entier de l'air se trouvant à l'intérieur de l'élément de pression.

8. Procédé selon l'une des deux revendications précédentes, **caractérisé en ce que** l'introduction de la coque externe (1, 2), avec le bas à double paroi ou le pied (7) ou la jambe de l'utilisateur ou la bande de pied introduit dans l'élément de pression, a lieu avant le remplissage de l'au moins un compartiment (8) du bas à double paroi avec une mousse durcissable et/ou avec des réactifs formant une mousse durcissable.

9. Procédé selon l'une des deux revendications précédentes, **caractérisé en ce que**, pendant et/ou après le durcissement de la mousse et/ou pendant et/ou après l'application de la pression, la coque externe (1, 2) est refroidie, plus particulièrement grâce au fait que l'extérieur (12') de l'élément de pression flexible (10) est rempli partiellement ou entièrement d'un fluide de refroidissement, de préférence d'un liquide, plus particulièrement d'eau.

10. Procédé selon l'une des deux revendications précédentes, **caractérisé en ce que** la pression appliquée est de 0,1 à 2,0 bar, de préférence de 0,2 à 1,0 bar, de préférence de 0,3 à 0,5 bar au-dessus de la pression atmosphérique.

11. Chaussure, de préférence pour le sport, plus particulièrement chaussure de ski ou patin à glace, comprenant une coque externe (1, 2), constituée au moins partiellement ou entièrement d'une matière plastique thermoplastique et au moins une chaussure interne (3), constituée au moins partiellement de mousse, insérée dans la coque externe (1, 2), qui peut être fabriquée ou qui est fabriquée selon un procédé selon l'une des revendications précédentes.

12. Dispositif de mise en oeuvre d'un procédé selon l'une des revendications 1 à 10, comprenant :
a) un compartiment (8) conçu pour résister à la pression avec au moins une ouverture de logement (9) pour le passage d'une chaussure et/ou
b) au moins un élément de pression flexible (10) disposé à l'intérieur du compartiment (8) conçu pour résister à la pression, qui est conçu pour envelopper la chaussure introduite, chaque élément de pression flexible (10) étant conçu pour être étanche à la pression par rapport à chaque ouverture de logement, de façon à ce que, entre le compartiment (8) résistant à la pression et l'élément de pression flexible (10), un extérieur de l'élément de pression, qui est fermé ou qui peut être fermée de manière étanche à la pression par rapport à l'environnement extérieur, un intérieur (12"), fermé de manière étanche à la pression par rapport à l'extérieur (12'), de l'élément de pression flexible, qui est en relation avec l'environnement extérieur par l'intermédiaire de l'ouverture de logement (9),
c) au moins une admission (13) montée sur le compartiment (9) résistant à la pression pour l'introduction d'un fluide exerçant une pression, de préférence d'un gaz, plus particulièrement de l'air, dans le compartiment (8) résistant à la pression ou à l'extérieur (12') de l'élément de pression, ainsi que
d) au moins une admission (14) pour l'introduction d'un fluide de refroidissement, de préférence d'un liquide, plus particulièrement d'eau dans le compartiment (8) résistant à la pression ou à l'extérieur (12') de l'élément de pression.

13. Dispositif selon la revendication précédente, **caractérisé en ce que** le compartiment (8) résistant à la pression comprend en outre
a) une évacuation (15) pour l'évacuation du fluide exerçant la pression, de préférence une soupape d'évacuation réglable en pression et/ou
b) une évacuation (16) pour l'évacuation du fluide de refroidissement, de préférence une soupape d'arrêt.

14. Dispositif selon l'une des deux revendications précédentes, **caractérisé en ce que** l'élément de pression flexible (10) est fixé du côté du fond avec une complémentarité de forme et/ou par friction avec le fond du compartiment (8) résistant à la pression.

15. Dispositif selon la revendication précédente, **caractérisé en ce que** la fixation comprend un emplacement pour une chaussure introduite (11).

16. Dispositif selon l'une des revendications 12 à 15, **caractérisé en ce que**, dans la direction verticale, l'admission est prévue pour l'introduction d'un fluide exerçant la pression et, si existant, l'évacuation est prévue pour l'évacuation du fluide exerçant la pression en dessous de l'admission pour l'introduction d'un fluide de refroidissement et, si existant, l'évacuation est prévue pour l'évacuation du fluide de refroidissement.
